# EUROPÄISCHE PATENTSCHRIFT

(11) **EP 3 169 468 B1**
(45) Veröffentlichungstag und Bekanntmachung des Hinweises auf die Patenterteilung: **31.01.2018**
(21) Anmeldenummer: 15747393.5
(22) Anmeldetag: 15.07.2015
(51) Int. Cl.: B23K 1/005, B23K 3/06

(54) **VORRICHTUNG ZUR VEREINZELTEN APPLIKATION VON VERBINDUNGSMATERIALDEPOTS**
DEVICE FOR THE INDIVIDUAL APPLICATION OF CONNECTION MATERIAL DEPOTS
DISPOSITIF PERMETTANT D'APPLIQUER INDIVIDUELLEMENT DES DÉPÔTS DE MATÉRIAU D'ASSEMBLAGE

(30) Priorität: 15.07.2014 DE 102014109934
(43) Veröffentlichungstag der Anmeldung: 24.05.2017
(73) Patentinhaber: Pac Tech - Packaging Technologies GmbH, 14641 Nauen (DE)
(72) Erfinder: AZDASHT, Ghassem, 13591 Berlin (DE); KRAUSE, Thorsten, 16727 Velten (DE)
(74) Vertreter: advotec.
(86) Internationale Anmeldenummer: PCT/EP2015/066196
(87) Internationale Veröffentlichungsnummer: WO 2016/008941

(56) Entgegenhaltungen:
- WO-A1-03/024653
- DE-A1- 19 541 996
- US-B1- 6 336 581

## Beschreibung

Die vorliegende Erfindung betrifft eine Vorrichtung zur vereinzelten Applikation von Lotmaterialdepots, insbesondere Lotkugeln, mit einer Fördereinrichtung zur vereinzelten Förderung der Lotmaterialdepots von einem an einem Gehäuseoberteil der Vorrichtung angeordneten Lotmaterialreservoir zu einer an einem Gehäuseunterteil der Vorrichtung angeordneten Applikationseinrichtung, wobei die Fördereinrichtung als eine um eine Rotationsachse geförderte, in einem Aufnahmeraum zwischen dem Gehäuseunterteil und dem Gehäuseoberteil angeordnete Förderscheibe ausgebildet ist, die als Durchgangslöcher ausgebildete Transportaufnahmen aufweist, die jeweils von einer Aufnahmeposition P1, in der ein Lotmaterialdepot aus dem Lotmaterialreservoir aufgenommen wird, in eine Übergabeposition P2 bewegbar sind, in der das Lotmaterialdepot über eine im Gehäuseoberteil ausgebildete Druckbohrung mit Druckgas beaufschlagt wird und aus der das Lotmaterialdepot an ein Applikationsmundstück der Applikationseinrichtung in eine Applikationsposition P3 übergeben wird, wobei die Applikationseinrichtung einen im Gehäusunterteil ausgebildeten Applikationskanal aufweist, der gleichzeitig ein unteres Teilstück eines Übertragungskanals ausbildet, der zur Übertragung von Laserstrahlung zu dem im Applikationsmundstück angeordneten Lotmaterialdepot dient, wobei der Übertragungskanal sich mit einem oberen Teilstück durch das Gehäuseoberteil erstreckt.

Eine Vorrichtung der eingangs genannten Art ist aus der DE 195 41 996 A1 bekannt. Bei der bekannten Vorrichtung ist die Applikationseinrichtung an der Unterseite der Vorrichtung angeordnet, mit einem Applikationskanal, der sich parallel zur Rotationsachse der Förderscheibe erstreckt. Die bekannte Vorrichtung ist zur Applikation von Lotmaterialdepots auf Anschlussflächen von Substraten oder elektronischen Bauteilen bestimmt, wobei die Lotmaterialdepots nach Applikation auf den Anschlussflächen umgeschmolzen werden. Die bekannte Vorrichtung eignet sich dabei in besonderem Maße zur Applikation der Lotmaterialdepots auf Anschlussflächen, die sich in einer Ebene senkrecht zur Rotationsachse bzw. parallel zur der Förderscheibe befinden.

In der Praxis treten bei der Verbindung von Bauteilen auch Konfigurationen auf, in denen die miteinander zu verbindenden Anschlussflächen der Bauteile oder Substrate nicht in einer gemeinsamen Ebene angeordnet sind, sondern einen Winkel einschließen, so dass die Anschlussflächen beispielsweise senkrecht zueinander angeordnet sind.

Bei derartigen Konfigurationen hat es sich als besonders vorteilhaft herausgestellt, wenn die im Applikationsmundstück der Applikationseinrichtung angeordneten Lotmaterialdepots zunächst partiell aufgeschmolzen und anschließend durch Gasdruck beaufschlagt längs einer Applikationsachse gegen die Anschlussflächen geschleudert werden, derart, dass zur Herstellung einer Kontaktverbindung zwischen den Anschlussflächen beide Anschlussflächen mit dem Lotmaterialdepot benetzt werden. Idealerweise stimmt dabei die Applikationsachse mit der Winkelhalbierenden des zwischen den Anschlussflächen ausgebildeten Winkels überein, so dass also bei einem Winkel von 90° zwischen den Anschlussflächen die ideale Applikationsachse unter einem Winkel von 45° zu den Anschlussflächen geneigt ist.

Wenn, wie bei der bekannten Vorrichtung, die Applikationsachse parallel zur Rotationsachse der Förderscheibe ausgerichtet ist, muss also die gesamte Vorrichtung um 45° geneigt werden, um die Applikationsachse unter 45° zu den Anschlussflächen ausrichten zu können. Hierdurch befindet sich die Förderscheibe nicht mehr in einer horizontalen Ebene, so dass es zu Störungen während des Transports der in den Transportaufnahmen der Förderscheibe vereinzelt aufgenommenen Lotmaterialdepots kommen kann.

Der vorliegenden Erfindung liegt daher die Aufgabe zugrunde, die bekannte Vorrichtung so weiterzuentwickeln, dass die Vorrichtung ohne Beeinträchtigung der Funktion der Förderscheibe eine Applikation von Lotmaterialdepots auf Anschlussflächen ermöglicht, die unter einem Winkel zueinander angeordnet sind.

Diese Aufgabe wird durch eine Vorrichtung mit den Merkmalen des Anspruchs 1 gelöst.

Bei der erfindungsgemäßen Vorrichtung ist der Applikationskanal unter einem Winkel α gegenüber der Drehachse geneigt.

Mit der erfindungsgemäßen Vorrichtung wird die Applikation von Lotmaterialdepots unter einem definierten Applikationswinkel gegenüber der Rotationsachse ermöglicht, so dass eine Ausrichtung des Applikationskanals auf die gewünschte Applikationsachse nicht zwangsläufig mit einer entsprechenden Neigung der Rotationsachse verbunden ist. Die erfindungsgemäße Vorrichtung ermöglicht also auch bei einer auf miteinander zu verbindende Anschlussflächen ausgerichteten, unter einem Winkel gegenüber der Rotationsachse geneigten Applikationsachse die Anordnung der Förderscheibe in einer horizontalen Ebene, so dass ein zuverlässiger Betrieb der als Förderscheibe ausgebildeten Fördereinrichtung gewährleistet ist.

Besonders vorteilhaft und vielseitig lässt sich die Vorrichtung einsetzen, wenn der Applikationswinkel α zwischen 30 und 60° beträgt.

Insbesondere für die Fälle, in den eine von zwei miteinander zu kontaktierenden Anschlussflächen parallel zur Förderscheibe und die andere Anschlussfläche unter einem rechten Winkel zur ersten Anschlussfläche angeordnet ist, hat sich ein Applikationswinkel α von etwa 45° als vorteilhaft erweisen, wobei geringe Abweichungen bis zu 10° immer noch den gewünschten Erfolg ermöglichen.

Bei einem besonders bevorzugten Ausführungsbeispiel verlaufen der Applikationskanal und der Übertragungskanal koaxial längs einer gemeinsamen Kanalachse, so dass zur Ausrichtung der Laserstrahlung auf ein im Applikationsmundstück des Applikationskanals angeordnetes Lotmaterialdepot keine besonderen Maßnahmen innerhalb der Vorrichtung notwendig sind. Somit können das Gehäuseoberteil und das Gehäuseunterteil der Vorrichtung zur Ausbildung des Applikationskanals und des Übertragungskanals mit fluchtenden Bohrungen versehen werden, wodurch die Fertigung der Vorrichtung vereinfacht wird.

Besonders vorteilhaft ist es, wenn in einem Schnittpunkt der Kanalachse mit einer Oberfläche des Gehäuseoberteils eine Kopplungseinrichtung mit einer Strahlumlenkeinrichtung vorgesehen ist, die eine Umlenkung der Laserstrahlung auf die Kanalachse ermöglicht, so dass zum einen eine Laserquelle unabhängig und mit Abstand von der Vorrichtung angeordnet werden kann, und zum anderen mittels der an der Oberfläche des Gehäuseoberteils angeordneten Strahlumlenkeinrichtung eine gute Zugänglichkeit der Strahlumlenkeinrichtung gegeben ist, die eine leichte Anpassung der Strahlumlenkeinrichtung an unterschiedliche Positionen der Laserquelle ermöglicht, um sicherzustellen, dass in jedem Fall eine Strahlumlenkung derart erfolgt, dass die Laserstrahlung im Übertragungskanal parallel zur Kanalachse bzw. parallel zur Applikationsachse verläuft.

Vorzugsweise ist die Strahlumlenkeinrichtung mit einer transparenten Abdeckung versehen, so dass die Strahlumlenkeinrichtung von störenden Umgebungseinflüssen abgeschirmt werden kann.

Besonders vorteilhaft ist es, wenn sich der Übertragungskanal von einer Oberseite des Gehäuseoberteils zu einer Unterseite des Gehäuseunterteils erstreckt, wobei die Kanalachse die Ebene der Rotationsachse der Vorrichtung schneidet. Hierdurch ergibt sich zum einen ein besonders kompakter Aufbau der Vorrichtung, die selbst bei einer zur Unterseite des Gehäuseunterteils geneigten Anordnung des Applikationsmundstücks sicherstellt, dass sich das Applikationsmundstück innerhalb des durch den Umfang des Gehäuseunterteils begrenzten Raumes befindet und daher nicht über den Umfang des Gehäuseunterteils hervorragt. Zum anderen ermöglicht die Erstreckung des Übertragungskanals von der Oberseite des Gehäuseoberteils die Anordnung der Kopplungseinrichtung an der Oberseite des Gehäuseoberteils, so dass es möglich ist, die Laserquelle auch oberhalb des Gehäuseoberteils in einem vom Umfang des Gehäuseoberteils begrenzten Raum anzuordnen, und somit nicht nur die Vorrichtung selbst, sondern auch die Laserquelle als Bestandteil der Peripherie der Vorrichtung oberhalb der Vorrichtung angeordnet werden kann, ohne seitlich die Vorrichtung zu überragen. Auch hierdurch wird dem Erfordernis einer insgesamt platzsparenden Ausbildung der Vorrichtung sogar einschließlich der Peripheriegeräte Rechnung getragen.

Wenn zur Überführung eines Lotmaterialdepots aus der Übergabeposition in die Applikationsposition ein den Aufnahmeraum der Förderscheibe mit dem Applikationskanal verbindender Zuführkanal in der Ebene der Rotationsachse verläuft, ist es möglich, den Zuführkanal, also die Strecke, die das Lotmaterialdepot von der Förderscheibe bis zum Applikationskanal zurücklegen muss, als möglichst direkte Verbindung im Wesentlichen senkrecht auszugestalten, so dass zusätzlich zur Druckgasbeaufschlagung des Lotmaterialdepots die Förderung des Lotmaterialdepots längs der Förderstrecke durch die Schwerkraft unterstützt wird. Hierdurch ergeben sich möglichst kurze Förderzeiten für die Überführung des Lotmaterialdepots aus der Übergabeposition in die Applikationsposition.

Bei einer besonders bevorzugten Ausführungsform ist der Applikationskanal über eine Druckbohrung mit einem Drucksensor verbunden, der den Gasdruck in der Applikationseinrichtung zwischen der in der Übergabeposition P2 angeordneten Transportaufnahme und einer Applikationsöffnung des Applikationsmundstücks misst, wobei der Applikationskanal über eine transparente Abdichtung von dem oberen Teilstück des Übertragungskanals gasdicht abgetrennt ist, so dass mittels des Drucksensors erfassbar ist, ob sich ein Lotmaterialdepot in der Applikationsposition P3 befindet.

Besonders bevorzugt ist es, wenn die Abdichtung als Boden einer Kanalhülse ausgebildet ist, die an ihrem oberen Ende mit der Kopplungseinrichtung versehen ist. Vorzugsweise ragt die Kanalhülse hierzu mit ihrem oberen Ende aus der Oberfläche des Gehäuseoberteils der Vorrichtung hinaus und ist in einer Aufnahmebohrung der Kopplungseinrichtung angeordnet. Somit kann die Kanalhülse nicht nur zur definierten Anordnung der Abdichtung im Übertragungskanal, sondern darüber hinaus auch zur Befestigung der Kopplungseinrichtung am Oberteil der Vorrichtung genutzt werden.

Nachfolgend wird eine bevorzugte Ausführungsform der Vorrichtung Bezug nehmend auf die Zeichnungen näher erläutert.

Es zeigen:
- **Fig. 1**: eine Vorrichtung zur vereinzelten Applikation von Verbindungsmaterialdepots in isometrischer Darstellung und Seitenansicht;
- **Fig. 2**: die in **Fig. 1** dargestellte Vorrichtung in isometrischer Darstellung und Seitenansicht;
- **Fig. 3**: die in **Fig. 2** dargestellte Vorrichtung in einer Schnittdarstellung längs Schnittlinienverlauf III-III;
- **Fig. 4**: eine Explosionsdarstellung der Vorrichtung.

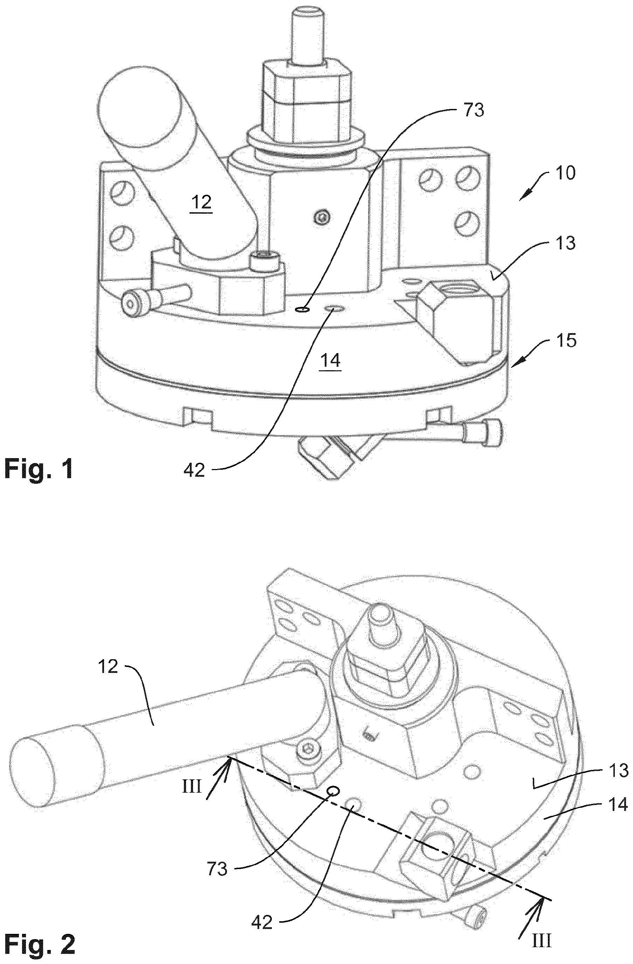

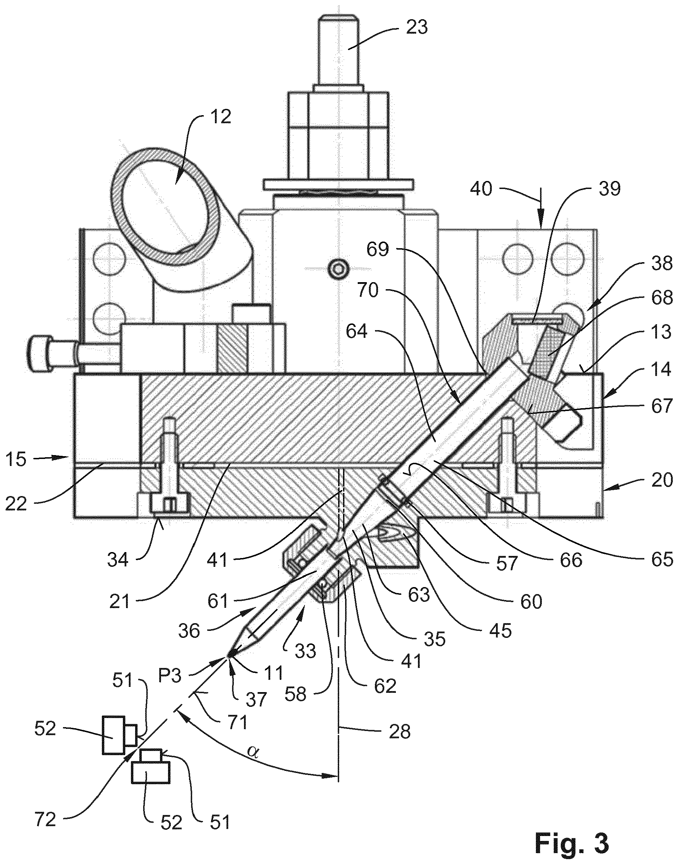

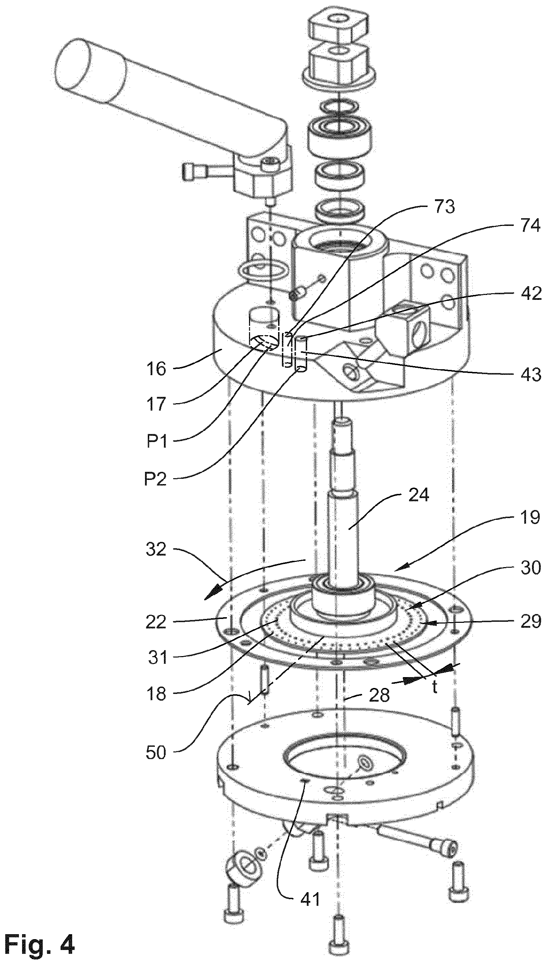

In den **Fig. 1 bis 4** ist eine Vorrichtung 10 zur vereinzelten Applikation von Lotmaterialdepots 11 **(****Fig. 3****)** dargestellt, wobei die Lotmaterialdepots 11 im vorliegenden Fall als Lotmaterialkugeln ausgebildet sind, die zur Bevorratung in einem Lotmaterialreservoir 12 aufgenommen sind, das auf einer Oberseite 13 eines Gehäuseoberteils 14 eines Vorrichtungsgehäuses 15 angeordnet ist. Im Gehäuseoberteil 14 ist unterhalb einer Anschlussöffnung 16 **(****Fig. 4****)** ein Lotmaterialkanal 17 ausgebildet, der es ermöglicht, dass Lotmaterialdepots 11 aus dem Lotmaterialreservoir 12 in als Durchgangslöcher ausgebildete Transportaufnahmen 18 **(****Fig. 4****)** einer als Förderscheibe 19 ausgebildeten Fördereinrichtung gelangen, die zwischen dem Gehäuseoberteil 14 und einem Gehäuseunterteil 20 in einem Aufnahmeraum 21 **(****Fig. 3****)** aufgenommen ist. Zur Ausbildung des Aufnahmeraums 21 ist zwischen dem Gehäuseoberteil 14 und dem Gehäuseunterteil 20 ein Gehäusering 22 konzentrisch zur Förderscheibe 19 angeordnet.

In dem Gehäuseoberteil 14 befindet sich eine an ihrem Antriebsende 23 mit einem hier nicht näher dargestellten Motorantrieb koppelbare Förderwelle 24, die einen Drehantrieb der Förderscheibe 19 um eine Rotationsachse 28 ermöglicht.

Wie **Fig. 4** zeigt, weist die Förderscheibe 19 zusätzlich zu den Transportaufnahmen 18, die auf einem Förderkreis 29 der Förderscheibe 19 äquidistant angeordnet sind, einen Steuerkreis 30 auf, der konzentrisch und im vorliegenden Fall innerhalb des Förderkreises 29 angeordnet ist und jeweils auf einer gemeinsamen radialen Achse 50 mit den Transportaufnahmen 18 Steuerbohrungen 31 aufweist. Diese Steuerbohrungen 31 wirken mit einer im Vorrichtungsgehäuse 15 angeordneten, hier nicht näher dargestellten Lichtschrankeneinrichtung zusammen und ermöglichen die Steuerung einer getakteten Kreisförderbewegung der Förderscheibe 19 um die Rotationsachse 28, derart, dass in Förderrichtung 32 der Fördereinrichtung 19 die Transportaufnahmen 18 aus einer Aufnahmeposition P1 unterhalb des mit dem Lotmaterialreservoir 12 verbundenen Lotmaterialkanals 17 jeweils um eine Teilung t des Förderkreises 29 in die Förderrichtung 32 vorwärts bewegt werden und in eine Übergabeposition P2 gelangen, in der sich die Transportaufnahmen 18 zwischen einem im Gehäuseoberteil 14 ausgebildeten und mit einem Druckgasanschluss 42 versehenen Druckgaskanal 43 und einem im Gehäuseunterteil 20, etwa in der Ebene der Rotationsachse 28 ausgebildeten Zuführkanal 41 **(****Fig.** 3) befinden, der in den Applikationskanal 35 der Applikationseinrichtung 33 mündet.

Wie **Fig. 3** zeigt, weist die Applikationseinrichtung 33 an ihrem unteren Ende ein als Kanüle ausgebildetes und auswechselbar am Gehäuseunterteil 20 angeordnetes Applikationsmundstück 36 mit einer Applikationsöffnung 37 auf, die im vorliegenden Fall in ihrem Durchmesser kleiner bemessen ist als der Durchmesser der Lotmaterialdepots 11, so dass ein aus der Übergabeposition P2 zum Applikationsmundstück 36 übergebenes Lotmaterialdepot 11 in einer Applikationsposition P3 zur Anlage gegen einen Öffnungsrand der Applikationsöffnung 37 gelangt. Das Applikationsmundstück 36 ist im vorliegenden Fall mittels einer Überwurfmutter 62 mit dem Gehäuseunterteil 20 verschraubt, wobei der Anschluss des Applikationsmundstücks 36 an das Gehäuseunterteil 20 zur Abdichtung gegenüber dem Gehäuseunterteil 20 eine Dichtung 58 aufweist.

Wie **Fig. 3** zeigt, bildet der Applikationskanal 35 ein unteres Teilstück 63 eines Übertragungskanals 64 aus, der zur Übertragung von Laserstrahlung zu dem im Applikationsmundstück 36 angeordneten Lotmaterialdepot 11 dient, wobei der Übertragungskanal 64 sich mit einem oberen Teilstück 65 durch das Gehäuseoberteil 14 erstreckt und der Applikationskanal unter einem Winkel α gegenüber der Rotationsachse 28 geneigt ist. Im Falle des dargestellten Ausführungsbeispiels verlaufen der Applikationskanal 35 und der Übertragungskanal 64 koaxial längs einer gemeinsamen Kanalachse 66, die die Ebene der Rotationsachse 28 schneidet.

Am oberen Ende des Übertragungskanals 64 und am Gehäuseoberteil 14 der Vorrichtung 10 angeordnet befindet sich eine Kopplungseinrichtung 38, die in einem Schnittpunkt der Kanalachse 66 mit einer Oberfläche 67 des Gehäuseoberteils 14 angeordnet ist und einer Strahlumlenkeinrichtung 68 aufweist, die mit einer transparenten Abdeckung 39 versehen ist und eine Umlenkung einer von einer oberhalb der Vorrichtung 10 angeordneten, hier nicht dargestellten Laserquelle emittierten Laserstrahlung 40 auf die Kanalachse 66 ermöglicht.

Die Kopplungseinrichtung 38 ist auf einem oberen Ende 69 einer Kanalhülse 70 angeordnet, das aus dem Übertragungskanal 64 herausragt. An ihrem unteren, in das Gehäuseunterteil 20 hineinragenden Ende ist die Kanalhülse 70 mit einer hier als O-Ring ausgebildeten Dichtung 57 gegenüber dem Gehäuseunterteil 20 abgedichtet. Das untere Ende der Kanalhülse 70 ist darüber hinaus mit einer transparenten gasdichten Abdichtung 60 versehen, die einen im Applikationskanal 35 oberhalb der Applikationsöffnung 37 ausgebildeten Druckraum 61 nach oben begrenzt.

Über die Strahlumlenkeinrichtung 68 kann eine Beaufschlagung des in der Applikationsposition P3 angeordneten Lotmaterialdepots 11 mit der Laserstrahlung 40 derart erfolgen, dass ein zumindest partielles Aufschmelzen des Lotmaterialdepots 11 erfolgt, so dass mittels einer Druckgasbeaufschlagung des Lotmaterialdepots 11 über den in den Applikationskanal 35 einmündenden Zuführkanal 41 das Lotmaterialdepot 11 durch die Applikationsöffnung 37 des Applikationsmundstücks 36 herausgeschleudert und längs einer mit der Kanalachse 66 fluchtenden Applikationsachse 71 in einen Kontaktspalt 72 zwischen Kontaktflächen 51 benachbarter Substrate 52 appliziert werden kann.

Zur Druckgasbeaufschlagung weist das Gehäuseoberteil 14 den in Fig. 4 dargestellten Druckgasanschluss 42 auf, der über den Druckgaskanal 43 im Gehäuseoberteil 14 oberhalb der Übergabeposition P2 mit dem im Gehäuseunterteil 20 ausgebildeten Zuführkanals 41 verbunden ist. Mittels der Druckgasbeaufschlagung des Lotmaterialdepots 11 kann sowohl eine Überführung des Lotmaterialdepots 11 in die Applikationsposition P3 an der Applikationsöffnung 37 des Applikationsmundstücks 36 als auch mittelbar über einen an die Druckbohrung 45 angeschlossenen, hier nicht dargestellten Drucksensor eine Auslösung der Laserbeaufschlagung des in der Applikationsposition P3 angeordneten Lotmaterialdepots 11 erfolgen.

Der Drucksensor ist über die Druckbohrung 45 mit dem im Applikationskanal 35 der Applikationseinrichtung 33 zwischen der Applikationsöffnung 37 und der Abdichtung 60 der Kanalhülse 70 definierten Druckraum 61 verbunden. Der Drucksensor erfasst einen sich im Druckraum 61 ausbildenden Überdruck, der dann entsteht, wenn die Applikationsöffnung 37 durch ein in der Applikationsposition P3 angeordnetes Lotmaterialdepot 11 verschlossen ist. Gesteuert über den Drucksensor erfolgt eine Auslösung der Laserbeaufschlagung also nur dann, wenn sich ein Lotmaterialdepot 11 in der Applikationsposition P3 befindet.

Wie aus den **Fig. 1, 2** **und** **4** ersichtlich kann darüber hinaus im Gehäuseoberteil 14 ein Sensoranschluss 73 für einen nicht näher dargestellten Lichtsensor vorgesehen sein, so dass beispielsweise über den Sensoranschluss 73 ein Lichtleiter an eine Sensorbohrung 74 angeschlossen werden kann, um eine ordnungsgemäße Befüllung der bei einer Rotation der Förderscheibe 19 an der Sensorbohrung 74 vorbei bewegten Transportaufnahmen 18 mit einem Lotmaterialdepot 11 prüfen zu können und etwa die Auslösung der Laserbeaufschlagung von der Detektion eines Lotmaterialdepots 11 abhängig zu machen.

## Patentansprüche

1. Vorrichtung (10) zur vereinzelten Applikation von Lotmaterialdepots (11), insbesondere Lotkugeln, mit einer Fördereinrichtung zur vereinzelten Förderung der Lotmaterialdepots von einem an einem Gehäuseoberteil (14) der Vorrichtung angeordneten Lotmaterialreservoir (12) zu einer an einem Gehäuseunterteil (20) der Vorrichtung angeordneten Applikationseinrichtung (33), wobei die Fördereinrichtung als eine um eine Rotationsachse (28) geförderte, in einem Aufnahmeraum (21) zwischen dem Gehäuseunterteil und dem Gehäuseoberteil angeordnete Förderscheibe (19) ausgebildet ist, die als Durchgangslöcher ausgebildete Transportaufnahmen (18) aufweist, die jeweils von einer Aufnahmeposition P1, in der ein Lotmaterialdepot aus dem Lotmaterialreservoir aufgenommen wird, in eine Übergabeposition P2 bewegbar sind, in der das Lotmaterialdepot über eine im Gehäuseoberteil ausgebildete Druckbohrung (42) mit Druckgas beaufschlagt wird und aus der das Lotmaterialdepot an ein Applikationsmundstück (36) der Applikationseinrichtung in eine Applikationsposition P3 übergeben wird, wobei die Applikationseinrichtung einen im Gehäuseunterteil ausgebildeten Applikationskanal (35) aufweist, der gleichzeitig ein unteres Teilstück (63) eines Übertragungskanals (64) ausbildet, der zur Übertragung von Laserstrahlung zu dem im Applikationsmundstück angeordneten Lotmaterialdepot dient, wobei der Übertragungskanal sich mit einem oberen Teilstück (65) durch das Gehäuseoberteil erstreckt,
**dadurch gekennzeichnet,**
**dass** der Applikationskanal (35) unter einem Applikationswinkel α gegenüber der Rotationsachse (28) geneigt ist.

2. Vorrichtung nach Anspruch 1,
**dadurch gekennzeichnet,**
**dass** der Applikationswinkel α zwischen 30° und 60° beträgt.

3. Vorrichtung nach Anspruch 2,
**dadurch gekennzeichnet,**
**dass** der Applikationswinkel α etwa 45° beträgt.

4. Vorrichtung nach einem der vorangehenden Ansprüche,
**dadurch gekennzeichnet,**
**dass** der Applikationskanal (35) und der Übertragungskanal (64) koaxial längs einer gemeinsamen Kanalachse (66) verlaufen.

5. Vorrichtung nach Anspruch 4,
**dadurch gekennzeichnet,**
**dass** in einem Schnittpunkt der Kanalachse (66) mit einer Oberfläche (67) des Gehäuseoberteils (14) eine Kopplungseinrichtung (38) mit einer Strahlumlenkeinrichtung (68) vorgesehen ist, die eine Umlenkung der Laserstrahlung auf die Kanalachse (66) ermöglicht.

6. Vorrichtung nach Anspruch 5,
**dadurch gekennzeichnet,**
**dass** die Strahlumlenkeinrichtung (68) mit einer transparenten Abdeckung (39) versehen ist.

7. Vorrichtung nach einem der Ansprüche 4 bis 6,
**dadurch gekennzeichnet,**
**dass** sich der Übertragungskanal (64) von einer Oberseite (13) des Gehäuseoberteils (14) zu einer Unterseite (34) des Gehäuseunterteils (20) erstreckt, wobei die Kanalachse (66) die Ebene der Rotationsachse (28) schneidet.

8. Vorrichtung nach einem der vorangehenden Ansprüche,
**dadurch gekennzeichnet,**
**dass** zur Überführung eines Lotmaterialdepots (11) aus der Übergabeposition P2 in die Applikationsposition P3 ein den Aufnahmeraum (21) der Förderscheibe (19) mit dem Applikationskanal (35) verbindender Zuführkanal (41) vorgesehen ist, der in der Ebene der Rotationsachse (28) verläuft.

9. Vorrichtung nach Anspruch 8,
**dadurch gekennzeichnet,**
**dass** der Applikationskanal (35) über eine Druckbohrung (45) mit einem Drucksensor verbunden ist, der den Gasdruck in der Applikationseinrichtung (33) zwischen der in der Übergabeposition P2 angeordneten Transportaufnahme (18) und einer Applikationsöffnung (37) des Applikationsmundstück (36) misst, wobei der Applikationskanal über eine transparente Abdichtung (60) vom dem oberen Teilstück (65) des Übertragungskanals (64) gasdicht abgetrennt ist.

10. Vorrichtung nach Anspruch 9,
**dadurch gekennzeichnet,**
**dass** die Abdichtung (60) als Boden einer Kanalhülse (70) ausgebildet ist, die an ihrem oberen Ende mit der Kopplungseinrichtung (38) versehen ist.

## Claims

1. A device (10) for the separate application of solder material deposits (11), in particular solder balls, comprising a conveying device for separately conveying solder material deposits from a solder material reservoir (12) arranged at an upper housing part (14) of the device toward an application device (33) arranged at a lower housing part (20) of the device, the conveying device being formed as a conveying disk (19) which is conveyed about a rotation axis (28), is arranged in an accommodating space (21) between the lower housing part and the upper housing part and has transport holders (18) which are formed as passage holes and each can be moved from a receiving position P1, in which a solder material deposit is received from the solder material reservoir, into a transfer position P2, in which the solder material deposit is exposed to a pressure gas via a pressure bore (42) formed in the upper housing part and from which the solder material deposit is transferred to an application nozzle (36) of the application device into an application position P3, the application device having an application duct (35) which is formed in the lower housing part and simultaneously forms a lower section (63) of a transmission duct (64) which serves for the transmission of laser radiation to the solder material deposit arranged in the application nozzle, the transmission duct extending with an upper section (65) through the upper housing part,
**characterized in that**
the application duct (35) is inclined at an application angle α with respect to the rotation axis (28).

2. The device according to claim 1,
**characterized in that**
the application angle α is between 30° and 60°.

3. The device according to claim 2,
**characterized in that**
the application angle α is about 45°.

4. The device according to any of the preceding claims, **characterized in that**
the application duct (35) and the transmission duct (64) extend coaxially along a common duct axis (66).

5. The device according to claim 4,
**characterized in that**
in a point of intersection of the duct axis (66) and a surface (67) of the upper housing part (14), a coupling device (38) is provided, comprising a beam deflection device (68) which allows the laser radiation to be deflected onto the duct axis (66).

6. The device according to claim 5,
**characterized in that**
the beam deflection device (68) is provided with a transparent cover (39).

7. The device according to any of the claims 4 to 6,
**characterized in that**
the transmission duct (64) extends from a top side (13) of the upper housing part (14) to a bottom side (34) of the lower housing part (20), the duct axis (66) intersecting the plane of the rotation axis (28).

8. The device according to any of the preceding claims,
**characterized in that**
for transferring a solder material deposit (11) from the transfer position P2 into the application position P3, a supply duct (41) is provided which connects the accommodating space (21) of the conveying disk (19) to the application duct (35) and which extends in the plane of the rotation axis (28).

9. The device according to claim 8,
**characterized in that**
the application duct (35) is connected to a pressure sensor via a pressure bore (45), said pressure sensor measuring the gas pressure in the application device (33) between the transport holder (18) arranged in the transfer position P2 and an application opening (37) of the application nozzle (36), the application duct being separated in a gas-tight manner from the upper section (65) of the transmission duct (64) by a transparent seal (60).

10. The device according to claim 9,
**characterized in that**
the seal (60) is formed as a bottom of a duct sleeve (70) which is provided with the coupling device (38) at its upper end.

## Revendications

1. Dispositif (10) pour l'application séparée de dépôts (11) de matériau de brasage, notamment de billes de brasure, comprenant un convoyeur destiné à transporter séparément les dépôts de matériau de brasage à partir d'un réservoir (12) de matériau de brasage disposé sur une partie supérieure (14) du boîtier du dispositif vers un dispositif d'application (33) disposé sur une partie inférieure (20) du boîtier du dispositif, le convoyeur étant formé comme disque transporteur (19) qui est transporté autour d'un axe de rotation (28), le disque transporteur (19) étant disposé dans un espace de logement (21) entre la partie inférieure et la partie supérieure du boîtier et ayant des logements de transport (18) qui sont formés comme trous traversants et qui peuvent chacun être déplacés à partir d'une position de réception P1, dans laquelle un dépôt de matériau de brasage est reçu du réservoir de matériau de brasage, dans une position de transfert P2, dans laquelle le dépôt de matériau de brasage est exposé à un gaz comprimé par un trou de pression (42) formé dans la partie supérieure du boîtier et à partir de laquelle le dépôt de matériau de brasage est transféré à une buse d'application (36) du dispositif d'application et dans une position d'application P3, le dispositif d'application ayant un canal d'application (35) qui est formé dans la partie inférieure du boîtier et qui forme simultanément un tronçon inférieur (63) d'un canal de transmission (64) qui sert à transmettre du rayonnement de laser au dépôt de matériau de brasage disposé dans la buse d'application, un tronçon supérieur (65) du canal de transmission s'étendant à travers la partie supérieure du boîtier,
**caractérisé en ce que**
le canal d'application (35) est incliné d'un angle α d'application par rapport à l'axe de rotation (28).

2. Dispositif selon la revendication 1,
**caractérisé en ce que**
l'angle α d'application est compris entre 30° et 60°.

3. Dispositif selon la revendication 2,
**caractérisé en ce que**
l'angle α d'application est d'environ 45°.

4. Dispositif selon l'une quelconque des revendications précédentes,
**caractérisé en ce que**
le canal d'application (35) et le canal de transmission (64) s'étendent de manière coaxiale le long d'un axe de canal (66) commun.

5. Dispositif selon la revendication 4,
**caractérisé en ce qu'**
un moyen de couplage (38) est prévu en un point d'intersection de l'axe de canal (66) et d'une surface (67) de la partie supérieure (14) du boîtier, le moyen de couplage (38) comprenant un moyen de déviation de faisceaux (68) qui permet de dévier le rayonnement laser vers l'axe de canal (66).

6. Dispositif selon la revendication 5,
**caractérisé en ce que**
le moyen de déviation de faisceaux (68) est muni d'un couvercle (39) transparent.

7. Dispositif selon l'une quelconque des revendications 4 à 6,
**caractérisé en ce que**
le canal de transmission (64) s'étend d'une face supérieure (13) de la partie supérieure (14) du boîtier à une face inférieure (34) de la partie inférieure (20) du boîtier, l'axe de canal (66) croisant le plan de l'axe de rotation (28).

8. Dispositif selon l'une quelconque des revendications précédentes,
**caractérisé en ce que**
pour le transfert d'un dépôt de matériau de brasage (11) à partir de la position de transfert P2 dans la position d'application P3, un canal d'amenée (41) est prévu qui relie l'espace de logement (21) du disque convoyeur (19) avec le canal d'application (35) et qui s'étend dans le plan de l'axe de rotation (28).

9. Dispositif selon la revendication 8,
**caractérisé en ce que**
le canal d'application (35) est relié avec un capteur de pression par un trou de pression (45), ledit capteur de pression mesurant la pression du gaz dans le dispositif d'application (33) entre le logement de transport (18) disposé dans la position de transfert P2 et un orifice d'application (37) de la buse d'application (36), le canal d'application étant séparé de manière étanche au gaz du tronçon supérieur (65) du canal de transmission (64) par un joint (60) transparent.

10. Dispositif selon la revendication 9,
**caractérisé en ce que**
le joint (60) est formé comme fond d'une douille de canal (70) qui est munie du moyen de couplage (38) à son extrémité supérieure.
